# DEMANDE DE BREVET EUROPEEN

(11) **EP 0 871 268 A1**
(43) Date de publication de la demande: **14.10.1998**
(21) Numéro de dépôt: 98400709.6
(22) Date de dépôt: 26.03.1998
(51) Int. Cl.: H02B 13/035

(54) **Poste de distribution d'énergie électrique**

(30) Priorité: 08.04.1997 FR 9704261
(71) Demandeur: GEC ALSTHOM T ET D SA, 75116 Paris (FR)
(72) Inventeur: Dams, Joachim, 34130 Mauguio (FR); Starck, Thierry, 34160 Castries (FR)
(74) Mandataire: Gosse, Michel

(57) **Abrégé**

Poste, de type "un disjoncteur et demi" composé de trois caissons parallélépipédiques rectangles étanches, identiques, (11, 11', 11") contenant chacun un disjoncteur et deux sectionneurs et comportant des traversées de courant pour mise en liaison des sectionneurs avec des barres et/ou câbles externes. Les traversées sont disposées obliquement en face supérieure de caisson en un rang de traversées frontales (27, 27A, 27B) et un rang parallèle de traversées arrières (27', 27'A, 27'B). Les deux caissons (11, 11") d'extrémité ont des traversées, frontales pour l'un et arrières pour l'autre, équipées pour une connexion en arrivée. Le caisson (11') médian a les traversées d'un rang individuellement reliées par des barres d'interconnexion (35) aux traversées d'un rang d'un des caissons voisins non-équipées pour une connexion en arrivée. Deux caissons (11, 11") ont des traversées d'un rang équipées pour être connectées à une barre d'interconnexion et à un câble d'un départ.

## Description

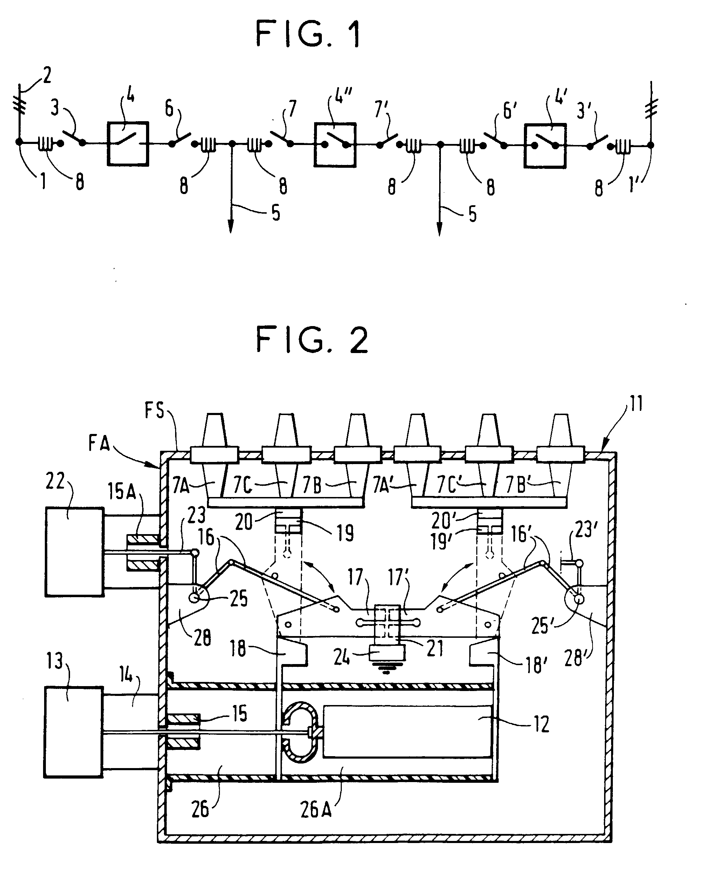

L'invention concerne un poste de distribution d'énergie électrique, moyenne tension, réalisé suivant un schéma de type dit "un disjoncteur et demi". Comme il est connu, les postes de type "un disjoncteur et demi" permettent d'alimenter deux départs de câbles distincts à partir de l'une ou l'autre de deux arrivées par lignes aériennes ou câbles à l'aide d'un montage qui ne nécessite qu'un nombre restreint de disjoncteurs. Ce montage est schématisé en figure 1, il comporte deux possibilités d'arrivée et deux possibilités de départ. Chacune des deux arrivées 1, 1' est alimentée en énergie par l'intermédiaire d'une liaison, 2 ou 2' polyphasée et le plus souvent triphasée, qui est raccordée à un sectionneur 3 ou 3', dit d'arrivée.

Un disjoncteur 4 ou 4' est positionné en aval de chaque sectionneur d'arrivée par rapport à la liaison 2 ou 2' aboutissant à ce sectionneur d'arrivée, il permet d'alimenter un départ par câbles 5 ou 5' par l'intermédiaire d'un sectionneur 6 ou 6', dit intermédiaire.

Un disjoncteur supplémentaire 4" est relié à deux sectionneurs 7 et 7', dits médians, qui sont respectivement raccordés l'un aux contacts fixes, l'autre aux contacts mobiles des chambres de coupure, non représentées, que comporte ce disjoncteur pour chacune des phases d'alimentation.

Chaque sectionneur médian 7 ou 7' est aussi raccordé aux câbles de l'un des départs 5 ou 5' avec un des sectionneurs intermédiaire 6 ou 6'.

Des transformateurs de courant 8, de type torique, sont montés à des fins de mesure et de gestion, d'une part au niveau de chaque arrivée 1, 1' en amont du sectionneur d'arrivée 3 ou 3' correspondant, et d'autre part au niveau de chaque départ 5, 5' en aval de chacun des deux sectionneurs, l'un intermédiaire 6 ou 6', l'autre médian 7 ou 7' reliés au même départ.

Les sous-ensembles, tels que les disjoncteurs, les sectionneurs, les transformateurs de courant, qui constituent ces postes sont généralement séparés les uns des autres et reliés comme nécessaires par des liaisons conductrices réalisées sous forme de barres isolées dans l'air. Un poste de ce genre a donc des dimensions importantes et il ne permet généralement d'avoir qu'une vision limitée du schéma d'ensemble qui lui correspond.

L'invention propose donc un poste de distribution d'énergie électrique, moyenne tension, réalisé suivant un schéma de type dit "un disjoncteur et demi" qui est obtenu par association de disjoncteurs et de sectionneurs en un agencement de cellules qui permet d'alimenter deux départs de câbles distincts à partir de l'une et/ou l'autre de deux arrivées par lignes aériennes ou câbles.

Selon une caractéristique de l'invention, l'agencement de cellules du poste est composé de trois caissons, parallélépipédiques rectangles, étanches, identiques et accolés, réalisés en tôle métallique, à l'intérieur de chacun desquels sont notamment logés un disjoncteur et deux sectionneurs électriquement positionnés de part et d'autre de ce disjoncteur, chaque caisson ayant une face supérieure qui comporte des orifices de passage pour des traversées de courant permettant de relier par conduction électrique des plots, dits de liaison, des sectionneurs avec des barres conductrices et/ou des câbles électriques externes au caisson, ces orifices étant disposés obliquement en deux rangs parallèles sur la face supérieure du caisson conduisant à une disposition des traversées par rapport à une face avant du caisson en un rang de traversées de courant dites frontales et d'un second rang de traversées de courant dites arrières et plus éloignées, les deux caissons d'extrémité ayant l'un des traversées frontales et l'autre des traversées arrières équipées pour une connexion en arrivée de fils de ligne aérienne ou de câbles, le caisson placé entre les deux autres ayant, d'une part, des traversées frontales reliées par des barres d'interconnexion aux traversées frontales du caisson voisin dont les traversées arrières sont équipées pour une connexion en arrivée et, d'autre part, des traversées arrières reliées par d'autres barres d'interconnexion aux traversées arrières du caisson voisin dont les traversées frontales sont équipées pour une connexion en arrivée, deux des caissons ayant chacun un rang de traversées équipées pour être simultanément connectées à des barres d'interconnexion les reliant à des traversées d'un autre caisson comme indiqué et à des câbles d'un départ qui est différent pour les deux caissons.

Selon une caractéristique de l'invention, les caissons sont alignés avec leurs barres d'interconnexion parallèles à l'axe d'alignement et en ce que les traversées de courant d'un même rang qui sont équipées pour être connectées à des câbles de départ sont placées sur les caissons d'extrémité et sont porteuses de connecteurs permettant le raccordement de chacun des câbles d'un départ et d'une barre d'interconnexion.

Selon une caractéristique d'une variante de l'invention, les caissons sont disposés côte à côte dans une disposition décalée, de manière que leurs barres d'interconnexion qui sont parallèles unissent les traversées de courant, frontales, respectives de ceux qui sont décalés vers l'arrière par rapport à un voisin immédiat avec les traversées de courant, arrières, de ce voisin et en ce que les traversées de courant d'un même rang qui sont équipées pour être connectées à des câbles de départ sont les traversées arrière des deux caissons immédiatement voisins qui sont les moins décalés vers l'arrière.

L'invention, ses caractéristiques et ses avantages sont précisés dans la description qui suit en liaison avec les figures évoquées ci-dessous.

La figure 1 présente un schéma électrique unifilaire d'un poste de type "un disjoncteur et demi" d'alimentation en triphasé.

La figure 2 présente une vue en coupe d'un exemple de cellule à caisson métallique étanche, pour poste selon le schéma de la figure 1, où sont logés au moins un disjoncteur et deux sectionneurs.

La figure 3 présente un schéma de principe partiel d'une cellule selon la figure 2 supposée vue de dessus et fictivement au travers de la face supérieure du caisson de cette cellule.

La figure 4 présente un sous-ensemble de raccordement d'une cellule, selon la figure 2, à un fil de ligne par l'intermédiaire d'une traversée de courant isolée par manchon.

La figure 5 présente un sous-ensemble de raccordement d'une cellule, selon la figure 2, à un câble unipolaire d'arrivée et à une barre isolée par l'intermédiaire d'un connecteur.

La figure 6 présente un schéma en vue de dessus d'un poste de type "un disjoncteur et demi", selon l'invention, à cellules décalées et raccordement de câbles par connecteurs en T.

La figure 7 présente un schéma en vue de dessus d'un poste de type "un disjoncteur et demi", selon l'invention, à cellules alignées et raccordement de câbles par connecteurs droits.

Selon l'invention, il est prévu de réaliser un poste de type "un disjoncteur et demi" l'aide de cellules telles que celle schématisée sur la figure 2. Cette cellule comporte un caisson 1 de forme parallélépipèdique rectangle, optimalement cubique, réalisé de manière connue de l'homme de métier pour être étanche.

Ce caisson 1, ici supposé en tôle métallique, est prévu pour contenir divers éléments d'appareillage électrique dont les éléments constitutifs d'au moins un disjoncteur ayant des chambres de coupure 12 dont les axes respectifs sont orientés perpendiculairement à une des parois formant la face avant FA du caisson.

Les chambres de coupure du disjoncteur sont disposées côte à côte dans un plan horizontal, elles sont ici supposés alignées de part et d'autre de celle qui est représentée sur la figure 2. Ces chambres sont par exemple de type chambre de coupure sous vide ou chambre remplie d'un gaz diélectrique de protection, tel que du SF6.

Un mécanisme de manoeuvre 13 du disjoncteur est positionné en avant du caisson. Il comporte au moins une bielle de manoeuvre 14, électriquement isolante qui passe au travers de la face avant FA par un dispositif de traversée étanche 15 et qui commande les chambres de coupure 12. Ces dernières sont respectivement portées par des supports isolants 16, horizontalement fixés sur la paroi de face avant FA, à l'intérieur du caisson 1.

Le caisson 1 est prévu pour pouvoir contenir les éléments d'un premier et d'un second sectionneurs qui prennent place au-dessus des chambres de coupure 12 du disjoncteur dans le caisson. Chaque sectionneur comporte trois paires de couteaux de contact mobiles, une seul couteau de chaque sectionneur est ici représenté, tel le couteau 17 pour le premier sectionneur et le couteau 17' pour le second. Ces paires de couteaux sont directement articulées chacune sur une pièce porteuse, individuelle, conductrice et fixe, telles les pièces 18 ou 18'.

Chaque chambre de coupure 12 est reliée par son contact mobile à l'une des pièces porteuses 18 et par son contact fixe à une des pièces porteuses 18', les pièces porteuses 18 et 18' sont fixées sur les supports isolants 16 que le caisson comporte.

Dans une position, dite de service, les trois paires de couteaux mobiles 17 ou 17' d'un sectionneur sont en contact avec trois plots conducteurs fixes, ici dits de liaison, tels 19 ou 19', situés sous la paroi constituant la face supérieure FS du caisson 11. Dans une forme préférée de réalisation, les couteaux sont orientés verticalement, ou quasi-verticalement comme représenté en pointillé, lorsqu'ils sont en position de service.

Dans une position, dite de mise la terre, les paires de couteaux mobiles d'un sectionneur sont en contact avec trois plots de mise à la terre, ici communs aux deux sectionneurs. Ces plots sont reliés à un collecteur de terre du caisson, un seul de ces plots 21 étant représenté en figure 2. Dans la réalisation proposée, chaque couteau mobile est orienté horizontalement ou quasi-horizontalement, comme représenté en trait plein, lorsqu'il est en position de mise à la terre,.

Dans une position, dite d'isolement, les couteaux mobiles d'un sectionneur sont électriquement isolés des plots de liaison 19 ou 19' et des plots de mise à la terre 21, ils sont par exemple basculés à mi-chemin entre les deux positions évoquées ci-dessus.

Comme connu, les couteaux mobiles, tel 17, du premier sectionneur, proche de la face avant FA, sont actionnés par un mécanisme de commande 22 extérieur au caisson 1. Une tige de manoeuvre 23 du mécanisme de commande passe au travers de la face avant FA par un dispositif de traversée étanche 15A identique ou similaire au dispositif de traversée étanche 15 évoqué plus haut. Cette tige de manoeuvre 23 agit sur un mécanisme comportant un arbre 25, des leviers 26 et des bielles isolantes 26A. La tige de manoeuvre 23 agit sur un levier qui fait partiellement tourner l'arbre 15. Ce dernier entraîne trois leviers qui commandent individuellement le passage des couteaux mobiles 7 d'une position à l'autre par l'intermédiaire des bielles isolantes 26A.

L'arbre 15 est ici porté par des paliers 28 fixés sur la paroi de la face avant FA à l'intérieur du caisson 1, un seul de ces paliers 28 étant représenté. Dans la réalisation proposée, les deux sectionneurs sont symétriquement disposé par rapport à un plan vertical, non représenté, et supposé passant par les plots de mise à la terre, ce plan étant parallèle à la face avant FA du caisson.

Le second sectionneur comporte un mécanisme de commande qui est extérieur au caisson 1' de même que le mécanisme de commande 22 à côté duquel il est situé en avant dudit caisson. Ce mécanisme comporte une tige de manoeuvre 23', partiellement représentée, qui passe au travers de la face avant FA par un dispositif de traversée étanche identique ou similaire au dispositif de traversée étanche 15 évoqué plus haut, de manière à longer un des parois latérales du caisson et à aboutir sur un des leviers 26' d'un système de transmission de mouvement analogue au système à leviers 26. La tige de manoeuvre 23' fait tourner un arbre 25' sur lequel sont articulés les leviers 26' qui commandent les déplacements des couteaux mobiles du second sectionneur entre les positions évoquées ci-dessus. L'arbre 25' est porté par des paliers 28' fixés sur la paroi qui est à l'opposé de la face avant FA dans le caisson, un seul de ces paliers étant vu sur la figure 2.

Dans une forme préférée de réalisation, les plots 21 de mise la terre sont portés par un même support qui est une traverse métallique 24 positionnée en partie centrale du caisson, entre les deux parois latérales de ce dernier, cette traverse servant aussi de renfort et permettant d'améliorer la tenue en pression ou éventuellement dépression de la cellule.

Les plots de liaison 19 et 19' sont destinés à être électriquement reliés des conducteurs de type barre, câble ou fil de ligne situés à l'extérieur du caisson.

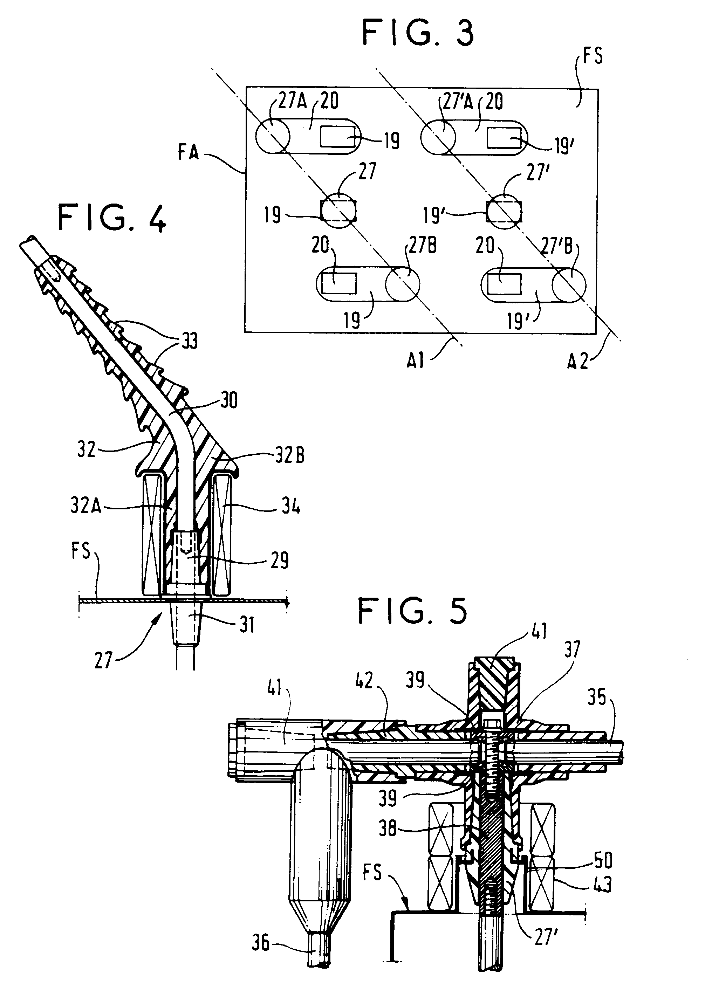

Ils sont reliés à cet effet à des traversées de courant 27 ou 27' permettant la transmission de l'énergie électrique par conduction tout en assurant le maintien de l'étanchéité du caisson vis-à-vis de l'environnement extérieur. Ces traversées de courant sont montées de manière étanche sur le caisson au niveau d'orifices ménagés à cet effet dans la face supérieure FS de ce caisson. Dans l'exemple de réalisation proposé et ainsi que le montre la figure 2, les traversées de courant portées par le caisson 1 sont disposées verticalement et sont réparties à l'alignement en deux rangs sur la face supérieure FS du caisson qui est d'allure rectangulaire, comme le montre la figure 3, ou même éventuellement carrée. Dans une forme de réalisation, les axes d'alignement A1-A1, A2-A2 de chacun des rangs de traversées de courant d'un caisson sont parallèles et obliquement disposés par rapport aux plans correspondant à la face avant FA et à la face supérieure FS de ce caisson, et par exemple à 45°, comme montré sur la figure 3. La traversée de courant 27 reliée au plot central fixe de liaison 19 du premier sectionneur est directement positionnée au-dessus de ce plot ainsi que du couteau mobile 17 correspondant. lorsque ce dernier est en position de service, comme montré sur la figure 2. Il en est de même pour la traversée de courant 27' reliée au plot de liaison central 19' du second sectionneur qui est aussi directement positionnée au-dessus de ce plot central 19' et du couteau mobile 17' correspondant, lorsque ce dernier est en position de service. Les deux autres traversées de courant telles 27A et 27B ou 27'A, 27'B qui sont alignées de part et d'autre d'une traversée de courant, centrale, 27 ou 27', sont alors reliées aux plots 19 qui leur correspondent par des barrettes conductrices 20 ou 20'.

Comme déjà indiqué, les plots de liaison 19, 19' sont alignés trois par trois parallèlement la face avant du caisson et les traversées sont disposées en oblique.

Dans la réalisation proposée les deux barrettes 20 reliées chacune à l'une des deux traversées de courant 27A et 27B sont disposées de manière symétrique par rapport à un plan vertical parallèle à la face avant qui passe par les axes de la traversée de courant centrale 27 et du plot de liaison 19 correspondant dans le caisson. Il en est de même en ce qui concerne les barrettes 20' reliées aux traversées 27'A et 27'B vis-à-vis d'un plan vertical parallèle au précédent qui passe par les axes de la traversée de courant centrale 27' et du plot de liaison 19' correspondant.

Un tel agencement permet de réaliser un couplage entre un élément de liaison triphasée situé à l'extérieur du caisson et relié aux traversées de courant 27, 27A, 27B et un élément de liaison triphasée situé à l'extérieur du caisson et relié aux traversées de courant 27'A, 27'B et 27'C. Le couplage s'effectue ici par l'intermédiaire d'une succession d'éléments comportant un premier sectionneur à couteaux mobiles 17. un disjoncteur à chambres de coupure 12 et un second sectionneur à couteaux mobiles 17'.

Ces deux sectionneurs sont symétriquement disposés par rapport à un plan vertical, non représenté et supposé passant par les plots 21 de mise à la terre, ce plan étant parallèle à la face avant FA du caisson. Le premier sectionneur est ici supposé situé dans le quart supérieur avant du caisson sous les barrettes 20 reliées à ses plots de liaison et les traversées de courant correspondantes 27, 27A, 27B, dites frontales, alors que le second sectionneur est supposé situé dans le quart supérieur arrière sous les barrettes 20' reliées à ses plots et les traversées de courant correspondantes 27'A, 27'B et 27'C, dites d'arrière.

Deux exemples de traversées de courant réalisées sous forme étanche, sont présentés sur les figures 4 et 5. Ces traversées sont destinées à permettre de réaliser un poste de distribution de type "un disjoncteur et demi" au moyen de cellules à caisson tel que décrit ci-dessus.

L a traversée de courant 27, de type air-gaz, présentée en figure 4, est destinée à être reliée à un des fils de phase d'une ligne aérienne de distribution, elle comporte des moyens, de type joint, lui permettant d'être étanche au gaz, comme connu en la matière. Une partie conique externe de raccordement 29 de cette traversée de courant reçoit un conducteur de liaison unipolaire. 30 extérieur au caisson 1 par l'intermédiaire duquel elle est reliée au fil d'une ligne aérienne, non représentée. Une partie interne de raccordement 31 de cette traversée de courant est reliée un plot conducteur de sectionneur dans le caisson, comme indiqué plus haut.

Un manchon en matériau élastomère isolant 32 recouvre le conducteur unipolaire 30 et s'emmanche sur la partie conique 29. Il est dimensionné de manière connue en soi de manière à permettre d'obtenir les distances diélectriques nécessaires entre conducteurs de phase et entre conducteurs de phase et de terre. Il comporte aussi des ailettes de révolution 33 de manière à augmenter la longueur de ligne de fuite.

Le conducteur unipolaire 30 peut être cintré de manière connue en soi de manière à augmenter les distances diélectriques à l'extrémité de la traversée avec un entre-axe réduit entre traversées de courant 27 ou 27'.

Dans une forme préférée de réalisation. le manchon 32 comporte une partie cylindrique qui est recouverte d'une couche conductrice et mise à la terre qui permet de plus le montage d'un transformateur de courant torique 34 autour de cette partie cylindrique. Ce transformateur est positionné au niveau de la partie externe de la traversée de courant concernée, par exemple sur une partie cylindrique 32A du manchon recouvrant notamment la partie conique 29 et une portion du conducteur unipolaire. Une seconde partie 32B de forme évasée assure une déflexion de champ électrique à l'extrémité de la couche conductrice. La couche conductrice que comporte chaque manchon se termine de manière évasée ou en arc de cercle au niveau de la seconde partie 32B, au-dessus des traversées, de manière à réduire le champ électrique en extrémité de couche conductrice.

La traversée de courant référencée 27' qui est détaillée dans le cadre du sous-ensemble présenté en figure 5, est destiné à être reliée à une barre conductrice externe 35 par l'intermédiaire d'un connecteur 37 et/ou à un câble unipolaire externe 36 par un connecteur 41. Dans l'exemple présenté, le connecteur 37 est de type en croix et il est emmanché sur une partie surmoulée isolante de la traversée de courant 27' qui est fixée de manière étanche sur une cheminée soudée au caisson au niveau d'une ouverture ménagée dans la paroi de la face supérieure de ce caisson et qui permet le passage d'un élément conducteur 38 de l'intérieur à l'extérieur du caisson. Cet élément conducteur 38 est électriquement relié la barre conductrice 35 qui est gainée d'isolant et à un élément conducteur de liaison 38' entre connecteurs 37 et 41 par l'intermédiaire de pièces conductrices 35 de connexion logées dans le connecteur 37, comme connu en ce domaine. Les pièces de connexion 35 sont ici rapprochées l'une de l'autre par une vis qui les traverse pour venir se fixer dans une extrémité de l'élément conducteur que contient la traversée de courant 27', elles enserrent alors les extrémités de la barre conductrice 35 et de l'élément conducteur de liaison 38'. La tête de la vis est accessible au travers d'un conduit qui débouche au sommet du connecteur en croix 37, lorsqu'un bouchon isolant qui ferme ce conduit est ôté, il est alors possible de dissocier, si besoin est, la barre conductrice 35 et l'élément conducteur de liaison 38' de l'élément conducteur 38.

La barre conductrice 35 s'emmanche dans une interface diélectrique, de forme cylindrique, d'un des bras du connecteur en croix et l'interface diélectrique de forme cylindrique du bras opposé reçoit une traversée de courant 42 où passe l'élément conducteur de liaison 38' entre connecteurs 37 et 41. Les divers emmanchements sont réalisés de manière diélectriquement étanches.

Le positionnement d'un bouchon isolant non représenté dans une des interfaces comportées par les bras du connecteur en croix 37 permet de n'utiliser ce connecteur que pour une barre conductrice 35 ou pour un câble 36.

La traversée de courant 42 comporte ici une partie conique standardisée qui lui permet de venir s'insérer dans l'un des conduits de forme complémentaire d'un connecteur 41, éventuellement droit ou encore en T comme présenté sur la figure 5. Un câble unipolaire 36 pénètre dans le connecteur 41 par un des conduits autrement libres qui est par exemple le conduit médian du T dans l'exemple présenté. L'interconnexion électrique de l'extrémité dénudée de ce câble unipolaire 36 et de celle de l'élément conducteur de liaison 38' étant réalisée dans le connecteur 41, comme il est connu de l'homme de métier.

La traversée de courant 27' est présentée montée en position surélevée par l'intermédiaire d'un élément tubulaire métallique 50 par rapport à la face supérieure FS du caisson sur laquelle elle est positionnée. Cet élément tubulaire 50 est ici supposé soudé à la paroi constituant cette face supérieure au niveau d'une des ouvertures ménagées pour les traversées de courant dans cette paroi. La surélévation des traversées de courant au moyen d'éléments tubulaires 50 permet de positionner des transformateurs de mesure de courant 34, de type torique, autour de ces éléments tubulaires, entre la face supérieure du caisson et les connecteurs en croix 37 que portent les traversées de courant.

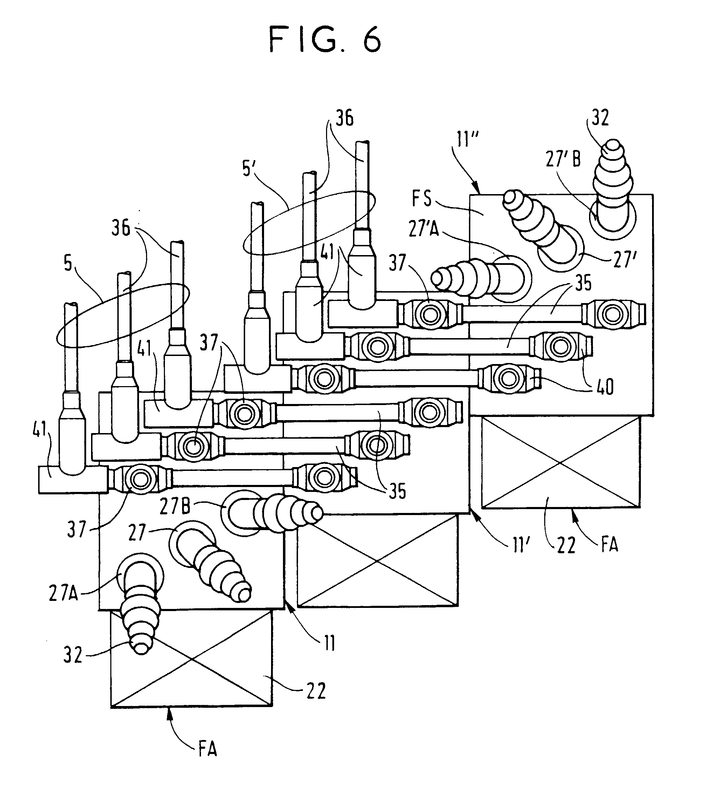

La figure 6 présente une vue de dessus d'un premier exemple de réalisation d'un poste distribution de type "un disjoncteur et demi", tel qu'électriquement défini par le schéma présenté en figure 1 et ce au moyen de trois cellules à caissons référencés 11, 11' 11", du type évoqué ci-dessus, dont les traversées de courant sont équipées de manchons ou de connecteurs tels que succinctement évoqués ci-dessus.

La cellule à caisson 11, située à gauche sur la figure, est destinée à être reliée à une arrivée, telle que 1 sur la figure 1, par trois traversées de courant, frontales, 27, 27A, 27B équipées de manchons isolants 32. Comme indiqué précédemment en liaison avec les figures 2 et 3, ces traversées de courant frontales sont reliées chacune au contact mobile d'une chambre de coupure d'un disjoncteur, tel que 4 en figure 1, via un premier sectionneur, tel que 3 (figure 1). Le caisson 11 contient aussi un second sectionneur qui est situé en aval du disjoncteur par rapport à l'arrivée 1 et qui est susceptible d'être exploité en tant que sectionneur intermédiaire, comme le sectionneur 6 de la figure 1. A cet effet, des connecteurs en croix 37 chapeautent extérieurement les trois traversées de courant, arrières, du caisson 11 qui sont reliées aux plots conducteurs fixes du second sectionneur de ce caisson.

Chacun de ces trois connecteurs en croix 37 permet le piquage direct d'un des trois câbles 36 d'un premier départ tel que 5 (figure 1). Ces câbles sont ici prévus raccordés aux connecteurs en croix par des connecteurs 41 qui permettent de les renvoyer en arrière par rapport au caisson 11.

Chacun des trois connecteurs en croix 37 équipant la cellule 11 permet aussi le raccordement d'une barre conductrice d'interconnexion 35 courant parallèlement à la face avant FA du caisson de la cellule 11 au-dessus de ce caisson et en arrière de cette face.

Chacune des trois barres d'interconnexion 35 qui sont parallèles aboutit à un connecteur 40, ici supposé de même type qu'un connecteur en croix 37, ce connecteur chapeautant une des trois traversées de courant, frontales, du caisson 11' d'une seconde cellule. Le caisson 11' de la seconde cellule est décalé en arrière par rapport au caisson 11 de la première à côté duquel il est placé, de manière que les barres d'interconnexion 35 qui joignent les traversées de courant, arrières, du caisson 11 aux traversées de courant, frontales, du caisson 11' s'étendent parallèlement aux faces avants de ces caissons, en arrière de chacune de ces faces et au-dessus des deux caissons.

La cellule à caisson 11' comporte trois traversées de courant, arrières, chapeautées de connecteurs en croix 37 qui permettent chacun le piquage direct d'un des trois câbles 36 d'un second départ tel que 5' (figure 1), de même que le permettent les connecteurs en croix 37 du caisson 11 pour le départ 5. Ces câbles sont ici prévus raccordés aux connecteurs en croix par des raccords 35 qui permettent de les renvoyer en arrière par rapport au caisson 11'.

Chacun des trois connecteurs en croix 37 équipant les traversées de courant, arrières, du caisson 11' permet aussi le raccordement d'une barre conductrice d'interconnexion 35 courant parallèlement à la face avant FA du caisson au-dessus de ce caisson et en arrière de cette face et des barres d'interconnexion 35 reliées par des connecteurs 40 aux traversées de courant, frontales, du caisson. Chacune des trois barres d'interconnexion 35 , parallèles, qui sont reliées aux connecteurs en croix 37 équipant les traversées arrières du caisson 11' parallèles, aboutit à un connecteur 40, en L ou éventuellement en T, chapeautant une des trois traversées de courant, frontales, du caisson 11" d'une troisième cellule. Le caisson 11" de la troisième cellule est décalé en arrière par rapport au caisson 11' de la seconde à côté duquel il est placé, de manière que les barres d'interconnexion 35 qui joignent les traversées arrières de courant de l'une aux traversées de courant, frontales, de l'autre s'étendent parallèlement aux faces avants de ces caissons 11' et 11", dans les mêmes conditions que pour les barres d'interconnexion 35 entre caissons 11 et 11'.

La cellule à caisson 11" comporte trois traversées de courant, arrières, qui sont équipées de manchons isolants 32 pour permettre à cette cellule d'être reliée à une arrivée, telle que 1' (figure 1).

Cette disposition du poste implique un décalage des caissons des cellules, de l'ordre d'une demi-cellule l'une par rapport à l'autre permet le raccordement des câbles de départ.

Bien entendu, les arrivées peuvent l'une et/ou l'autre s'effectuer par l'intermédiaire de câbles, des arrivées par connecteurs en croix se substituant alors aux arrivées par conducteurs équipés de manchons isolants 32.

Les transformateurs de mesure de courant 34 montés sous les connecteurs en croix chapeautant les traversées de courant 27, 27A, 27B, 27', 27'A et 27'B correspondent bien de par leurs positionnements respectifs aux transformateurs 8 évoqués en relation avec la figure 1.

Il est possible dans la variante à câbles évoquée ci-dessus, de réaliser un poste où les deux caissons 1 et 1" des cellules latérales sont symétriquement équipés par rapport à un plan vertical passant par l'axe longitudinal médian du caisson de la cellule médiane 1'.

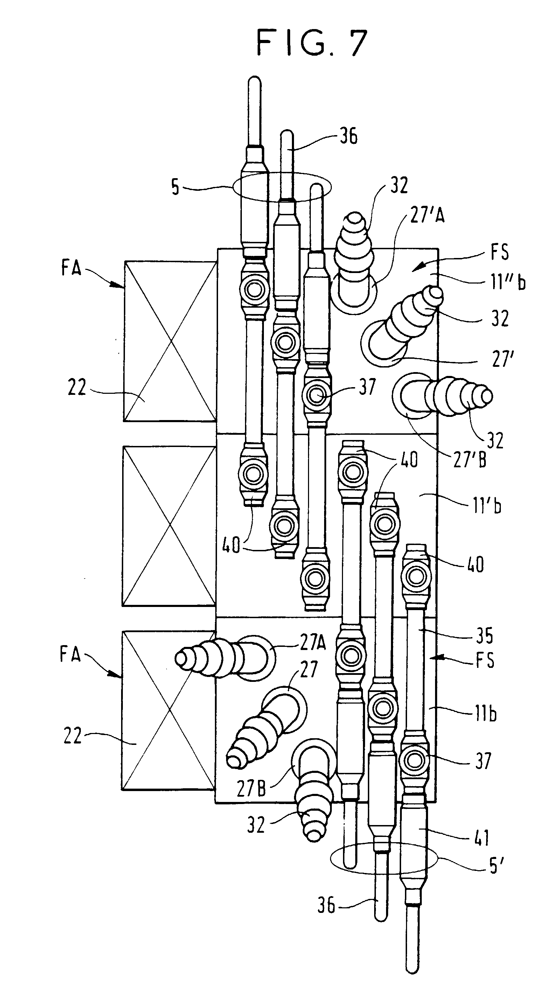

La figure 7 présente une variante de réalisation d'un poste distribution de type "un disjoncteur et demi", réalisé au moyen de trois cellules dont les caissons 11b, 11b, 11"b sont identiques aux caissons référencés 11, 11', 11" et dont les traversées de courant sont équipées de manchons ou de connecteurs en croix tels que succinctement évoqués ci-dessus, les positions des caissons latéraux 11b et 11"b ayant pratiquement été permutées vis-à-vis du caisson médian 11b par rapport aux positions des cellules 11, 11', 11".

Dans cet exemple, la cellule à caisson 11"b qui est située en haut sur la figure 7, serait située à gauche, si les faces avants des cellules étaient orientées vers le bas comme sur la figure 6, ce qui n'a pas été possible pour des raisons d'encombrement.

La cellule à caisson 11"b est ici destinée à être reliée à une arrivée, telle que 1 sur la figure 1, par les trois traversées de courant, arrières, 27', 27'A, 27'B du caisson qui sont équipées de manchons isolants 32. Ces traversées sont reliées chacune au contact fixe d'une chambre de coupure d'un disjoncteur, via un second sectionneur, comme déjà indiqué. Le premier sectionneur du caisson est relié d'une part aux traversées de courant, frontales, du caisson et d'autre par aux contacts mobiles des chambres de coupure du disjoncteur du caisson. Les traversées de courant, frontales, du caisson 11"b sont chapeautées de connecteurs comme l'étaient celles du caisson 11", ces connecteurs étant ici des connecteurs en croix référencés 37, comme les précédents.

Chacun de ces connecteurs en croix 37 permet d'une part le piquage direct d'un des trois câbles 36 d'un premier départ tel que 5 (figure 1), d'autre part, le raccordement d'une barre conductrice d'interconnexion 35 courant parallèlement à la face avant FA du caisson de la cellule 11"b au-dessus de ce caisson et en arrière de cette face.

Les câbles 36 du premier départ 5 parviennent au caisson 11"b parallèlement à l'axe d'alignement des caissons 11b, 11'b, 11"b qui est parallèle aux faces avants de ces cellules et non plus par l'arrière comme cela était dans la réalisation présentée en figure 6.

Chacune des trois barres d'interconnexion 35 raccordée à l'un des connecteurs 37 du caisson 11"b aboutit à un connecteur 40 chapeautant une des trois traversées de courant, frontales, du caisson 11'b d'une seconde cellule qui est alignée à côté de la cellule à caisson 11"b.

Les trois traversées de courant, arrières, comportées par le caisson 11'b sont aussi chapeautées par des connecteurs 40 qui sont orientés en sens inverse par rapport à ceux qui chapeautent les trois traversées frontales de ce caisson. Les connecteurs 40 chapeautant les traversées de courant, arrières, du caisson 11'b reçoivent des barres d'interconnexion 35 orientées vers les traversées de courant, arrières, d'un caisson 11b d'une troisième cellule alignée avec les deux précédentes de l'autre côté du caisson 11'b par rapport au caisson 11"b.

Les traversées de courant, arrières, de ce caisson 11b sont chapeautées par des connecteurs en croix 37 qui permettent, d'une part, le raccordement des barres d'interconnexion 35 reliant ce caisson 11b au caisson 11'b et le piquage direct d'un des trois câbles 36 d'un second départ tel que 5' (figure 1). Les barres d'interconnexion 35 reliant les caissons 11b et 11'b courent parallèlement aux faces avants de ces caissons, en arrière de ces faces et des barres d'interconnexion 35, reliant les caissons 11'b et 11"b, auxquelles elles sont parallèles. Les câbles 36 du second départ 5' parviennent au caisson 11b parallèlement à l'axe d'alignement des caissons 11b, 11'b, 11"b, de l'autre côté du poste formé à l'aide de ces caissons, en arrière des câbles 36 du premier départ 5 et en sens inverse. Les traversées de courant, frontales, 27A, 27b, 27C du caisson 11B sont équipées de manchons isolants 32 qui leur permettent d'être reliées à une arrivée de ligne aérienne identique à l'arrivée l'évoquée en liaison avec les figures 1 et 6.

Il est bien entendu possible de réaliser un poste analogue en positionnant des manchons 32 sur les traversées de courant, arrières, du caisson 11b et sur les traversées de courant, frontales, du caisson 11"b et en modifiant en conséquence les connecteurs et leurs positionnements pour les trois caissons du poste ainsi agencé.

De même comme déjà indiqué en relation avec la figure 6, les arrivées peuvent être l'une et/ou l'autre s'effectuer par l'intermédiaire de câbles, des connecteurs en L ou éventuellement en T se substituant alors aux arrivées par conducteurs équipés de manchons isolants 32

La mise en oeuvre de sectionneurs à trois positions tels qu'évoqués plus haut permet de réaliser une mise à la terre de chacun des deux départs par mise à la terre par l'intermédiaire des disjoncteurs et des sectionneurs dûment positionnés à la terre.

Dans chacun des cas envisagés précédemment, une réduction importante de l'encombrement du poste réalisé est obtenue, puisque l'intérieur des caissons est rempli au moyen d'un gaz diélectrique de protection, tel que le SF6, et qu'une isolation électrique est obtenue au niveau des barres d'interconnexion qui sont gainées d'isolant et au niveau des connecteurs. De plus ces barres et ces connecteurs sont susceptibles d'être de type blindé, par exemple par recouvrement par une couche conductrice et mise à la terre de cette couche. Il est aussi à noter que les parties sous tension ne subissent pas les influences de l'environnement en matière d'humidité et de pollution.

Les caissons d'un poste équipés chacun notamment du disjoncteur, des sectionneurs internes et des transformateurs de courant externes équipant les traversées de courant sont réalisables et testables en usine avant transport sur site.

En raison de la compacité de l'ensemble, il est aussi prévu de présenter le schéma représentatif d'un poste au niveau de l'avant de ce poste.

## Revendications

1. Poste de distribution d'énergie électrique, moyenne tension, réalisé suivant un schéma de type dit "un disjoncteur et demi" qui est obtenu par association de disjoncteurs et de sectionneurs en un agencement permettant d'alimenter deux départs de câbles distincts à partir de l'une et/ou l'autre de deux arrivées par lignes aériennes ou câbles, caractérisé en ce que l'agencement est composé de trois caissons, parallélépipédiques rectangles, étanches, identiques et accolés (11, 11', 11" ou 11b, 11'b, 11"b), réalisés en tôle métallique, à l'intérieur de chacun desquels sont notamment logés un disjoncteur et deux sectionneurs électriquement positionnés de part et d'autre de ce disjoncteur, chaque caisson ayant une face supérieure qui comporte des orifices de passage pour des traversées de courant permettant de relier par conduction électrique des plots, dits de liaison, des sectionneurs avec des barres conductrices et/ou des câbles électriques externes au caisson, ces orifices étant disposés obliquement en deux rangs parallèles sur la face supérieure du caisson conduisant à une disposition des traversées par rapport à une face avant du caisson en un rang de traversées de courant (27A, 27B, 27C), dites frontales, et d'un second rang de traversées de courant (27'A, 27'B, 27'C), dites arrières, les deux caissons (11, 11" ou 11b et 11"b) d'extrémité ayant l'un des traversées frontales et l'autre des traversées arrières équipées pour une connexion en arrivée de fils de ligne aérienne ou de câbles, le caisson (11' ou 11'b) placé entre les deux autres ayant, d'une part, un rang de traversées, soit frontales, soit arrières, reliées par des barres conductrices d'interconnexion (35) aux traversées frontales du caisson voisin dont les traversées arrières sont équipées pour une connexion en arrivée et, d'autre part, les traversées de l'autre rang reliées par d'autres barres d'interconnexion (35) aux traversées arrières du caisson voisin dont les traversées frontales sont équipées pour une connexion en arrivée, deux des caissons ayant chacun un rang de traversées équipées pour être simultanément connectées à des barres d'interconnexion les reliant à des traversées d'un autre caisson comme indiqué et à des câbles d'un départ qui est différent pour les deux caissons.

2. Poste, selon la revendication 1, caractérisé en ce que les caissons sont alignés avec leurs barres d'interconnexion parallèles à l'axe d'alignement et en ce que les traversées de courant d'un même rang qui sont équipées pour être connectées à des câbles de départ sont placées sur les caissons d'extrémité et sont porteuses de connecteurs permettant le raccordement de chacun des câbles d'un départ et d'une barre d'interconnexion.

3. Poste, selon la revendication 1, caractérisé en ce que les caissons sont disposés côte à côte dans une disposition décalée, de manière que leurs barres d'interconnexion qui sont parallèles unissent les traversées de courant, frontales, respectives de ceux qui sont décalés vers l'arrière par rapport à un voisin immédiat avec les traversées de courant, arrières, de ce voisin et en ce que les traversées de courant d'un même rang qui sont équipées pour être connectées à des câbles de départ sont les traversées arrière des deux caissons immédiatement voisins qui sont les moins décalés vers l'arrière.
